(19) 

Europäisches
Patentamt
European
Patent Office
Office européen
des brevets

(11) **EP 4 654 107 A1**

(12) **EUROPEAN PATENT APPLICATION**

(43) Date of publication:
26.11.2025  Bulletin 2025/48

(21) Application number: 25178258.7

(22) Date of filing: **22.05.2025**

(51) International Patent Classification (IPC):
*G06Q 20/02* (2012.01)        *G06Q 20/40* (2012.01)

(52) Cooperative Patent Classification (CPC):
**G06Q 20/027; G06Q 20/405**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.05.2024  AU 2024901506**

(71) Applicant: **Payments Insight Co Pty Ltd
Westmead, New South Wales 2145 (AU)**

(72) Inventors:
- **Aravinthan, Selvavinayagam
  Westmead New South Wales, 2145 (AU)**
- **Barr, Matthew Gordon
  Westmead New South Wales, 2145 (AU)**

(74) Representative: **Stöckeler, Ferdinand
Schoppe, Zimmermann, Stöckeler
Zinkler, Schenk & Partner mbB
Patentanwälte
Radlkoferstrasse 2
81373 München (DE)**

(54) **PAYMENT TERMINAL**

(57)    A payment terminal comprises a dynamic routing module configured to receive a payment transaction having a card profile, and to determine an optimal payment network for the received payment transaction based on a parameter, wherein the payment terminal uses the optimal payment network to process the payment transaction.

EP 4 654 107 A1

**Description**

**Technical Field**

The present invention relates generally to a payment system and, in particular, to the routing of a payment transaction by a payment terminal within the payment system.

**Background**

Regulators in many markets encourage competition and innovation between payment networks. To do so, regulators require payment applications from different networks to be present on a single payment device (e.g., mobile device or plastic card). This requirement provides merchants and their partner Acquirers routing options for processing transactions presented to a payment terminal (e.g. Point-of-Sale (POS) device). The process of determining the optimal payment network (eg. Visa™, Mastercard™ or eftpos™) for card transactions presents a multifaceted challenge that is becoming increasingly complex as payment networks evolve to address the technical needs dictated by multiple channels, payment devices, and payment instruments. This intricate ecosystem yields hundreds of distinct events encompassing transaction authorisation, fund clearing, and settlement with merchant banks.
There are two distinct technical challenges that have hindered the deployment of optimal real-time routing solutions. The primary technical challenge is ensuring that the processing latency in determining the optimal routing solution is extremely low (no more that 20-30 milliseconds) to operate in the demanding retail payments environment. This primary technical challenge is further complicated by the need for machine learning analytical solutions (requiring high computational capacity and time consuming) to determine the optimal network to process a given transaction. The second technical challenge (which is primarily - but not limited to - an issue in the physical retail environment) is the constrained capacity and processing power of the payment terminal. The technical limitation prevents the payment terminal from performing the complicated scenario analysis within the timeframes dictated by the primary technical constraint. Any other real-time solution that involved any remote processing capability to determine the optimal network would also end up creating significant payment processing latency thereby ruling it out.

**Summary**

It is an object of the present invention to substantially overcome, or at least ameliorate, one or more disadvantages of existing arrangements.
Disclosed are arrangements which seek to address the above problems by introducing a dynamic routing module in the payment terminal. The dynamic routing module contains predefined routing determination algorithms that are updated regularly via a server employing machine learning to analyse optimal routing solutions.
According to a first aspect of the present disclosure, there is provided a payment terminal comprising: a dynamic routing module configured to: receive a payment transaction having a card profile; and determine an optimal payment network for the received payment transaction based on a parameter, wherein the payment terminal uses the optimal payment network to process the payment transaction.
Another aspect of the present disclosure provides a method of determining an optimal payment network for a payment transaction having a card profile, the method comprising the steps of: receiving a payment transaction having a card profile; and determining an optimal payment network for the received payment transaction based on a parameter, wherein the payment terminal uses the optimal payment network to process the payment transaction.
Another aspect of the present disclosure provides a dynamic routing server comprising: machine learning models configured to determine optimal payment networks based on inputs, wherein the optimal payment networks are transmitted to a dynamic routing module on a payment terminal.
Another aspect of the present disclosure provides a payment system having a payment terminal described above and a dynamic routing server described above.
According to another aspect of the present disclosure, there is provided a computer program product including a computer readable medium having recorded thereon a computer program for implementing any one of the methods described above.
Other aspects are also disclosed.

**Brief Description of the Drawings**

Some aspects of the prior art and at least one embodiment of the present invention will now be described with reference to the drawings and appendices, in which:

Figs. 1A and 1B show a prior art arrangement for processing a payment transaction;

Figs. 2A to 2C show schematic block diagrams of arrangements in accordance with the present disclosure;

Figs. 3A and 3B collectively form a schematic block diagram representation of an electronic device upon which described arrangements can be practised;

Fig. 4 is a flow diagram of a method of processing a payment transaction at the payment terminal shown in Figs. 2A to 2C; and

Fig. 5 is a flow diagram of a sub-process performed by the dynamic routing module of the payment terminal shown in Figs. 2A to 2C.

## Detailed Description

Where reference is made in any one or more of the accompanying drawings to steps and/or features, which have the same reference numerals, those steps and/or features have for the purposes of this description the same function(s) or operation(s), unless the contrary intention appears.

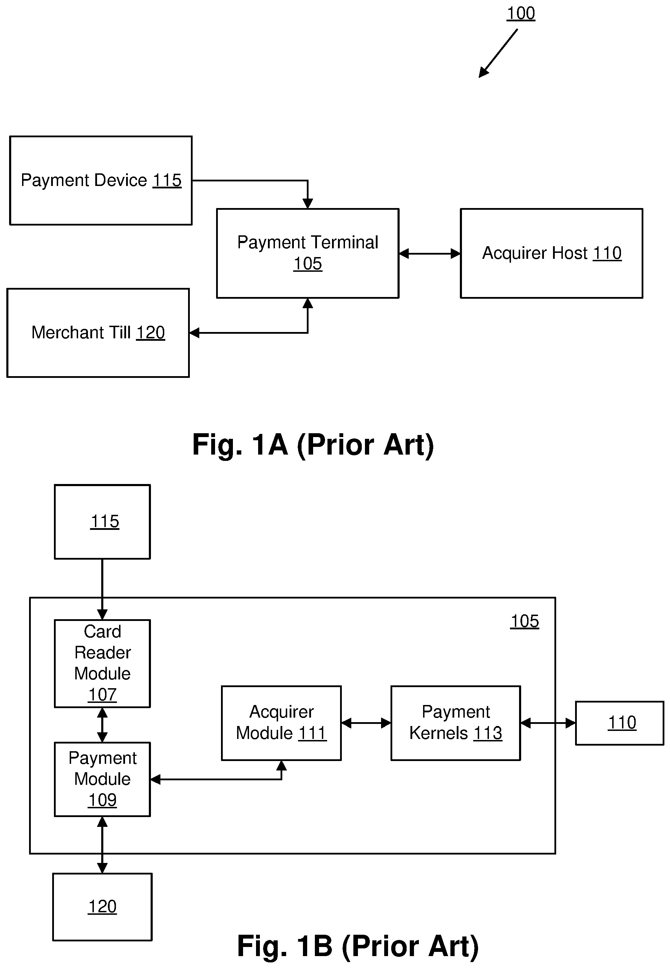

Fig. 1A shows a prior art arrangement of a payment system 100 in which payment transactions are processed. The payment system 100 includes a payment terminal 105, an acquirer host 110, a payment device 115, and a merchant till 120. The payment terminal 105 processes payment transactions and operatively connects with each of the acquirer host 110, the payment device 115, and, optionally, the merchant till 120. The functions of components 105, 110, 115 and 120 will be described hereinafter.

Fig. 1B shows a prior art arrangement of the payment terminal 105. The payment terminal 105 includes a card reader module 107, a payment module 109, an acquirer module 111, and payment kernels 113. The card reader module 107 operatively connects with the payment module 109, which in turn operatively connects with the acquirer module 111. The acquirer module 111 operatively connects with the payment kernels 113.

The operation of the payment system 100 will now be described in reference to Figs. 1A and 1B.

The payment system 100 commences processing of a payment transaction when the payment module 109 of the payment terminal 105 receives payment transaction details (e.g., transaction amount) from the merchant till 120. In one arrangement, the merchant till 120 is operatively connected to the payment terminal 105, such that the merchant till 120 receives the transaction details (e.g., via barcode scan, manual entry, etc.) and automatically transmits the transaction details to the payment module 109. In an alternative arrangement, the merchant till 120 receives the transaction details and displays the transaction details on a display on the merchant till 120. A user then manually enters the transaction details into the payment module 109.

The payment module 109 includes a Proximity Payment Service Environment (PPSE) module (not shown). When the payment module 109 receives the payment transaction details, the PPSE of the payment module 109 activates the card reader module 107. The card reader module 107 includes hardware (e.g., near field communication (NFC) reader, chip reader, etc.) that is able to read the payment device 115. In this case, the card reader module 107 activates its reader in response to receiving an activation command from the payment module 109. The payment terminal 105 may indicate the activation of the card reader module 107 with a light or prompt shown on the payment terminal 105. In turn, a user presents his/her payment device 115 to the card reader module 107. The payment device 115 may be a physical credit/debit card or a digital credit/debit card stored on a smartphone. When the payment device 115 is presented to the payment terminal 105, the card reader module 107 reads the card profile of the payment device 115. The card reader module 107 then transmits the card profile to the PPSE, which in turn adds the card profile to the payment transaction details.

In one arrangement, the PPSE then determines whether routing to a particular payment network (e.g., eftpos™) is preferred. If such a routing is preferred, the PPSE activates the card reader module 107 to acquire Priority #2 eftpos card profile. The card reader module 107 reads the Priority #2 eftpos card profile from the payment device 115 and provides the card profile to the PPSE. This arrangement is performed during reading of the card profile of the payment device 115. The payment device 115 may have multiple card profiles, each of which having defined priorities. Accordingly, these different card profiles are categorised as Priority #1 and Priority #2 card profiles, respectively.

In an alternative arrangement, the PPSE is pre-configured to instruct the card reader module 107 to select a card profile based on a preferred payment network and potentially transaction amount threshold. When the card reader module 107 receives such instructions, the card reader module 107 acquires the card profile according to the pre-configured instructions.

The payment module 109 then provides the payment transaction details (including the transaction amount and card profile) to the acquirer module 111. The acquirer module 111 then transmits the payment transaction details to the relevant payment kernel 113 (e.g., Visa™, MasterCard ™, Diners™, etc.). The relevant payment kernel 113 then transmits the payment transaction details to the acquirer host 110. The acquirer host 110 checks the payment transaction details and initiates payment processing via the selected network and provides the networks response (i.e., approval or denial) to the payment terminal 105.

It is to be noted that the discussions contained in the "Background" section and that above relating to prior art arrangements relate to discussions of documents or devices which form public knowledge through their respective publication and/or use. Such should not be interpreted as a representation by the present inventor(s) or the patent applicant that such documents or devices in any way form part of the common general knowledge in the art.

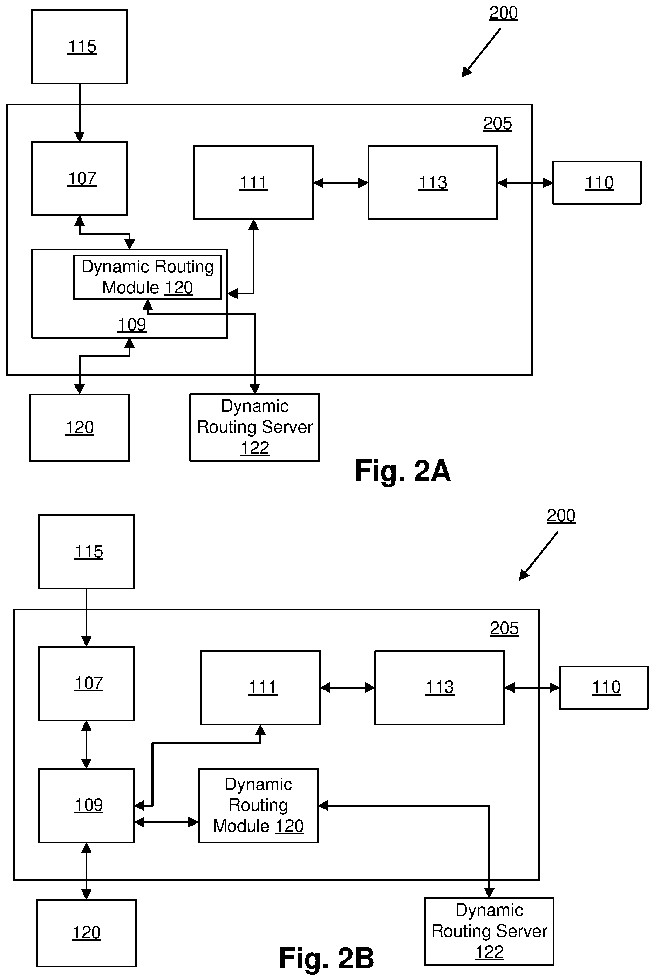

Figs. 2A to 2B show schematic block diagrams of a payment system 200 having a payment terminal 205 with a dynamic routing module 120 and a dynamic routing server 122. Otherwise, the other modules 107, 109, 111, and 113 of the payment terminal 205 are the same as the payment terminal 105. The dynamic routing module 120 is shown in Figs. 2A to 2C to be part of the payment terminal 205. Fig. 2A shows the preferred arrangement where the dynamic routing module 120 is embedded within the payment module 109, in particular the dynamic routing module 120 is integrated with the PPSE. The preferred arrangement reduces the processing latency as the PPSE is able to execute the dynamic routing module 120 without any need for transmitting the payment transaction details to another module first.

Fig. 2B shows the dynamic routing module 120 operatively connects with the payment module 109. A slight delay may be introduced by this arrangement as the payment transaction details are first transmitted from the payment module 109 to the dynamic routing module 120 before the payment module 109 receives the optimal routing data (i.e., the optimal payment network based on a particular parameter) from the dynamic routing module 120.

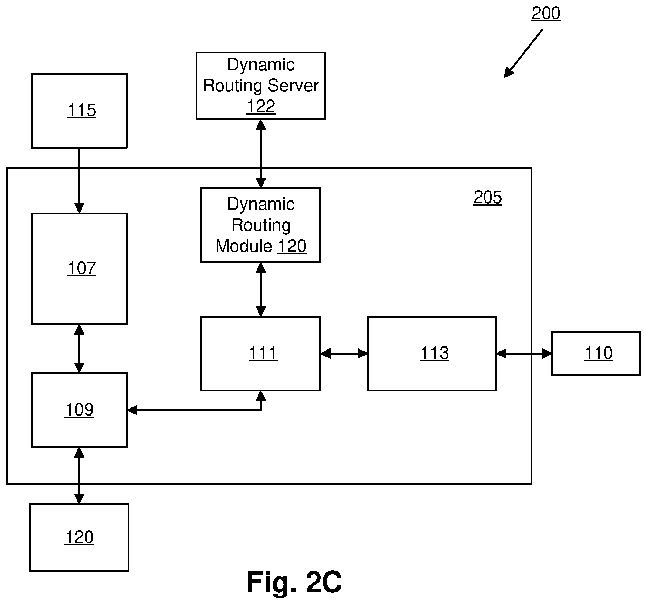

Fig. 2C shows the dynamic routing module 120 operatively connects with the acquirer module 111, meaning that the payment transaction details are first transmitted from the payment module 109 to the acquirer module 111 then onto the dynamic routing module 120. Further, the routing data is transmitted from the dynamic routing 120 to the acquirer module 111.

However, any of the arrangements shown in Figs. 2A to 2C may be used as long as the delay introduced by the dynamic routing module 120 is less than 20 to 30 milliseconds.

The dynamic routing module 120 is activated once the payment transaction details (including the card profile from the card reader module 107) are received. As discussed hereinbefore, there are two possible arrangements for the PPSE in processing the card profile of the payment device 115. In the first arrangement, the PPSE determines whether routing to a particular payment network (e.g., eftpos™) is preferred. With the dynamic routing module 120, the dynamic routing module 120 determines whether a certain payment network is optimal based on a particular parameter and, if a particular payment network (e.g., eftpos™) is optimal, then the PPSE instructs the card reader module 107 to obtain Priority #2 card profile. As the first arrangement occurs during the reading of the card profile of the payment device 115, the dynamic routing module 120 must be able to determine the optimal routing option and to acquire Priority #2 card profile when the card profile is being read by the card reader module 107. In the second arrangement, the card reader module 107 acquires both Priority #1 and Priority #2 card profiles (instead of acquiring only a preferred card profile as discussed hereinbefore). In another arrangement, the dynamic routing module 120 may determine whether a certain payment network is optimal for multiple parameters (discussed in the following paragraph).

The dynamic routing module 120 includes algorithms for determining the optimal routing data for using a particular payment network depending on certain parameters. These parameters may include approval rates, fraud rates, transaction rates, costs, transmission rates, and the like. For example, different payment networks have different fraud rates depending on location, transaction amount, card profile, time of transaction, and the like. The parameters are analysed by machine learning by the dynamic routing server 122 and the algorithm within the dynamic routing module 120 is updated accordingly. A merchant may have selected to use payment networks that have low fraud rates. Based on the current algorithm in the dynamic routing module 120, the dynamic routing module 120 provides the optimal payment network to reduce the risk of fraud occurring for a particular payment transaction. As discussed above, the algorithms may determine the optimal routing data based on multiple parameters (e.g., any one of approval rates, fraud rates, transaction rates, costs, transmission rates, and the like).

In one arrangement, the algorithm of the dynamic routing module 120 is a look-up table having inputs with predetermined outputs that have been determined by the dynamic routing server 122. The look-up table is updated regularly by the dynamic routing server 122 to ensure the optimal payment network is selected for optimizing a certain parameter. This arrangement is advantageous as the processing is performed by the dynamic routing server 122 where there is no processing and/or power constraints in determining the optimal payment network. Further, the look-up table algorithm in the dynamic routing module 120 does not require a lot of processing and power to determine the optimal payment network to optimize a certain parameter.

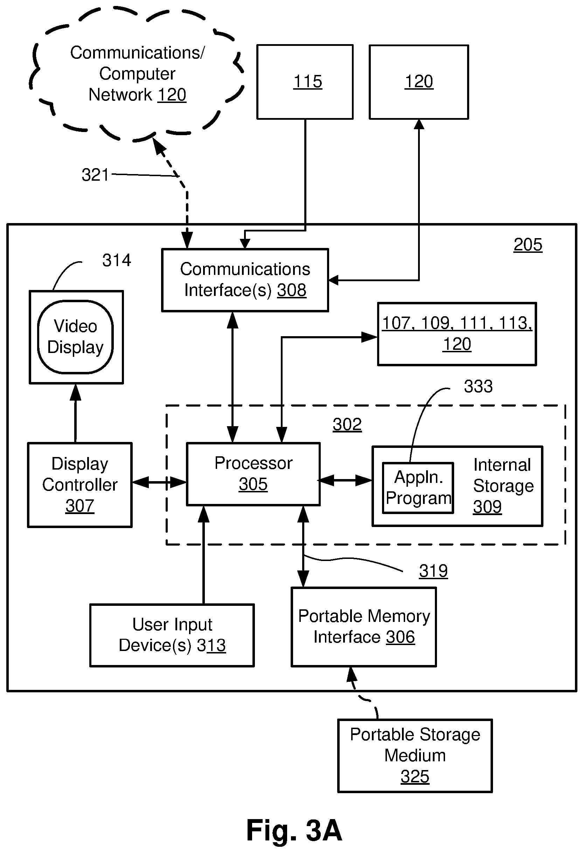

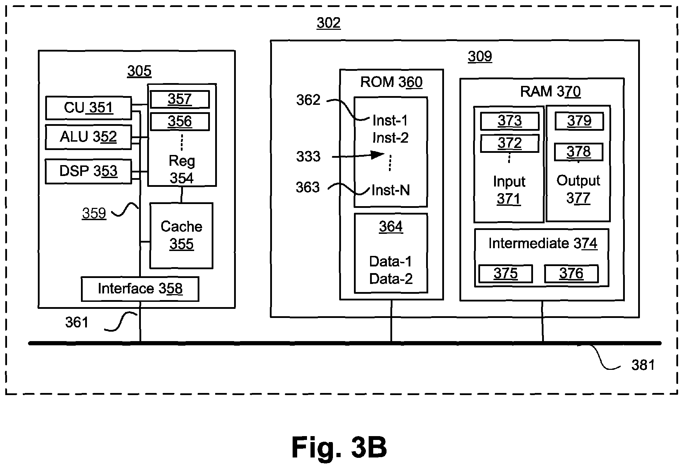

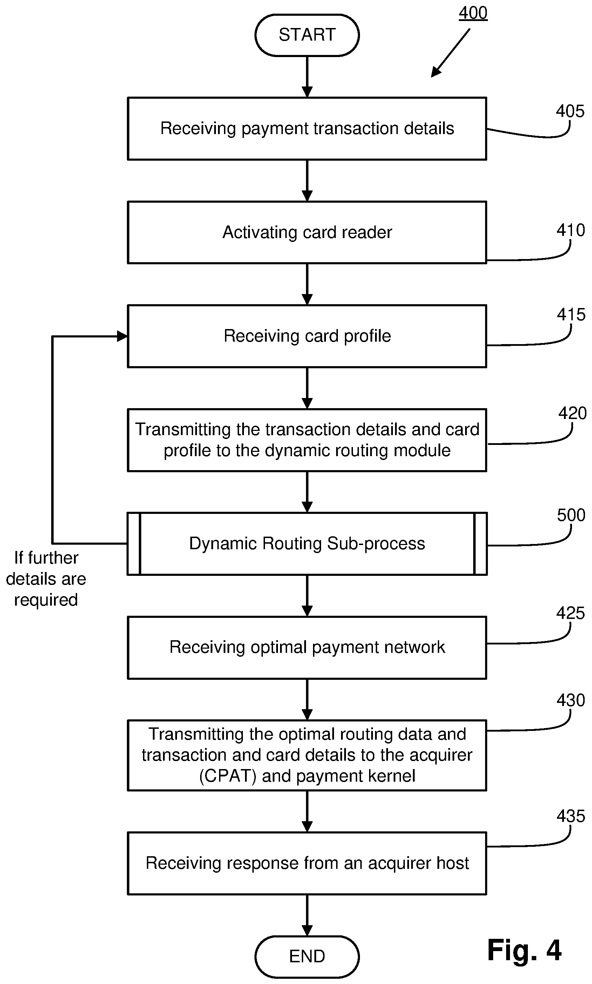

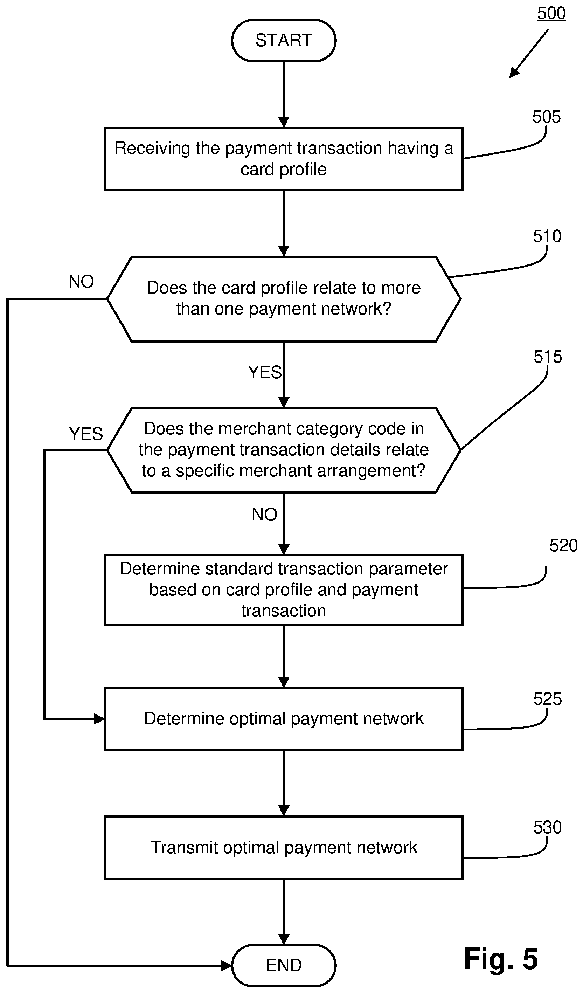

The operation of the payment terminal 205 in accordance with the present invention will be described hereinafter in relation to Figs. 4 and 5. Before describing the operation of the payment terminal 205, the hardware of the payment terminal 205 will be described first in relation to Figs. 3A and 3B.

The dynamic routing server 122 includes one or more machine learning models for determining an optimal payment network based on a particular parameter. As discussed above, the dynamic routing server 122 executes machine learning algorithms to determine an optimal payment network based on a certain parameter. For example, if fraud rates is the parameter, then the dynamic routing server 122 provides the optimal payment network to use based on fraud rates. To do so, the dynamic routing server 122 executes one or more machine learning models to determine the payment network with the least fraud rates based on different parameters (e.g., location, transaction amount, card profile, time of transaction, and the like). Once the dynamic routing server 122 determines the optimal payment network for the different parameters (e.g., fraud rates, approval rates, etc.), the resulting algorithms are transmitted to the dynamic routing module 120. The algorithms transmitted by the dynamic routing server 122 to the dynamic routing module 120 include updated mathematical algorithms, updated node weighting, updated neural network connections, parameters of certain formulae or look-up table, and the like.

In one arrangement, the dynamic routing server 122 executes the machine learning models regularly (e.g., daily, weekly, etc.) to determine the optimal payment network regularly. Once the regular updates are completed, the dynamic routing server 122 transmits at a predetermined interval (e.g., daily, weekly, etc.) the updated algorithms to the dynamic routing module 120.

**Description of Payment Terminal 205**

Figs. 3A and 3B collectively form a schematic block diagram of the payment terminal 205 including embedded components, upon which the payment transaction methods to be described are desirably practiced. The payment terminal 205 has limited processing resources.

As seen in Fig. 3A, the payment terminal 205 comprises an embedded controller 302. Accordingly, the payment terminal 205 may be referred to as an "embedded device." In the present example, the controller 302 has a processing unit (or processor) 305 which is bidirectionally coupled to an internal storage module 309. The storage module 309 may be formed from non-volatile semiconductor read only memory (ROM) 360 and semiconductor random access memory (RAM) 370, as seen in Fig. 3B. The RAM 370 may be volatile, non-volatile or a combination of volatile and non-volatile memory.

The payment terminal 205 includes a display controller 307, which is connected to a video display 314, such as a liquid crystal display (LCD) panel or the like. The display controller 307 is configured for displaying graphical images on the video display 314 in accordance with instructions received from the embedded controller 302, to which the display controller 307 is connected.

The payment terminal 205 also includes user input devices 313 which are typically formed by keys, a keypad or like controls. In some implementations, the user input devices 313 may include a touch sensitive panel physically associated with the display 314 to collectively form a touch-screen. Such a touch-screen may thus operate as one form of graphical user interface (GUI) as opposed to a prompt or menu driven GUI typically used with keypad-display combinations. Other forms of user input devices may also be used, such as a microphone (not illustrated) for voice commands or a joystick/thumb wheel (not illustrated) for ease of navigation about menus.

As seen in Fig. 3A, the payment terminal 205 also comprises a portable memory interface 306, which is coupled to the processor 305 via a connection 319. The portable memory interface 306 allows a complementary portable memory device 325 to be coupled to the payment terminal 205 to act as a source or destination of data or to supplement the internal storage module 309. Examples of such interfaces permit coupling with portable memory devices such as Universal Serial Bus (USB) memory devices, Secure Digital (SD) cards, Personal Computer Memory Card International Association (PCMIA) cards, optical disks and magnetic disks.

The payment terminal 205 also has a communications interface 308 to permit coupling of the payment terminal 205 to a computer or communications network 320 via a connection 321. The connection 321 may be wired or wireless. For example, the connection 321 may be radio frequency or optical. An example of a wired connection includes Ethernet. Further, an example of wireless connection includes Bluetooth™ type local interconnection, Wi-Fi (including protocols based on the standards of the IEEE 802.11 family), Infrared Data Association (IrDa) and the like.

The communication interface 308 may also include an NFC reader or a chip reader to read the card profile of the payment device 115. Further, the communication interface 308 enables the payment terminal 205 to communicate with the merchant till 205 to receive the payment transaction. In another arrangement, a user may enter the payment transaction via the user input devices 313.

The payment terminal 205 is configured to process the payment transaction. The embedded controller 302, in conjunction with modules 107, 109, 111, 113, and 120, perform the processing of the payment transaction.

The methods described hereinafter may be implemented using the embedded controller 302, where the processes of Figs. 4 to 5 may be implemented as one or more software application programs 333 executable within the embedded controller 302. The payment terminal 205 of Fig. 3A implements the described methods. In particular, with reference to Fig. 3B, the steps of the described methods are effected by instructions in the software 333 that are carried out within the controller 302. The software instructions may be formed as one or more code modules, each for performing one or more particular tasks. The software may also be divided into two separate parts, in which a first part and the corresponding code modules performs the described methods and a second part and the corresponding code modules manage a user interface between the first part and the user.

The software 333 of the embedded controller 302 is typically stored in the non-volatile ROM 360 of the internal storage module 309. The software 333 stored in the ROM 360 can be updated when required from a computer readable medium. The software 333 can be loaded into and executed by the processor 305. In some instances, the processor 305 may execute software instructions that are located in RAM 370. Software instructions may be loaded into the RAM 370 by the processor 305 initiating a copy of one or more code modules from ROM 360 into RAM 370. Alternatively, the software instructions of one or more code modules may be pre-installed in a non-volatile region of RAM 370 by a manufacturer. After one or more code modules have been located in RAM 370, the processor 305 may execute software instructions of the one or more code modules.

The application program 333 is typically pre-installed and stored in the ROM 360 by a manufacturer, prior to distribution of the payment terminal 205. In some instances, the application programs 333 may be updated via one or more computer readable storage media (not shown) and read via the portable memory interface 306 of Fig. 3A prior to storage in the internal storage module 309 or in the portable memory 325. In another alternative, the software application program 333 may be read by the processor 305 from the network 320, or loaded into the controller 302 or the portable storage medium 325 from other computer readable media. Computer readable storage media refers to any non-transitory tangible storage medium that participates in providing instructions and/or data to the controller 302 for execution and/or processing. Examples of such storage media include floppy disks, magnetic tape, CD-ROM, a hard disk drive, a ROM or integrated circuit, USB memory, a magneto-optical disk, flash memory, or a computer readable card such as a PCMCIA card and the like, whether or not such devices are internal or external of the payment terminal 205. Examples of transitory or non-tangible computer readable transmission media that may also participate in the provision of software, application programs, instructions and/or data to the payment terminal 205 include radio or infra-red transmission channels as well as a network connection to another computer or networked device, and the Internet or Intranets including e-mail transmissions and information recorded on Websites and the like. A computer readable medium having such software or computer program recorded on it is a computer program product.

The second part of the application programs 333 and the corresponding code modules mentioned above may be executed to implement one or more graphical user interfaces (GUIs) to be rendered or otherwise represented upon the display 314 of Fig. 3A. Through manipulation of the user input device 313 (e.g., the keypad), a user of the payment terminal 205 and the application programs 333 may manipulate the interface in a functionally adaptable manner to provide controlling commands and/or input to the applications associated with the GUI(s). Other forms of functionally adaptable user interfaces may also be implemented, such as an audio interface utilizing speech prompts output via loudspeakers (not illustrated) and user voice commands input via the microphone (not illustrated).

Fig. 3B illustrates in detail the embedded controller 302 having the processor 305 for executing the application programs 333 and the internal storage 309. The internal storage 309 comprises read only memory (ROM) 360 and random access memory (RAM) 370. The processor 305 is able to execute the application programs 333 stored in one or both of the connected memories 360 and 370. When the payment terminal 205 is initially powered up, a system program resident in the ROM 360 is executed. The application program 333 permanently stored in the ROM 360 is sometimes referred to as "firmware". Execution of the firmware by the processor 305 may fulfil various functions, including processor management, memory management, device management, storage management and user interface.

The processor 305 typically includes a number of functional modules including a control unit (CU) 351, an arithmetic logic unit (ALU) 352, a digital signal processor (DSP) 353 and a local or internal memory comprising a set of registers 354 which typically contain atomic data elements 356, 357, along with internal buffer or cache memory 355. One or more internal buses 359 interconnect these functional modules. The processor 305 typically also has one or more interfaces 358 for communicating with external devices via system bus 381, using a connection 361.

The application program 333 includes a sequence of instructions 362 through 363 that may include conditional branch and loop instructions. The program 333 may also include data, which is used in execution of the program 333. This data may be stored as part of the instruction or in a separate location 364 within the ROM 360 or RAM 370.

In general, the processor 305 is given a set of instructions, which are executed therein. This set of instructions may be organised into blocks, which perform specific tasks or handle specific events that occur in the payment terminal 205. Typically, the application program 333 waits for events and subsequently executes the block of code associated with that event. Events may be triggered in response to input from a user, via the user input devices 313 of Fig. 3A, as detected by the processor 305. Events may also be triggered in response to other sensors and interfaces in the electronic device 301.

The execution of a set of the instructions may require numeric variables to be read and modified. Such numeric variables are stored in the RAM 370. The disclosed method uses input variables 371 that are stored in known locations 372, 373 in the memory 370. The input variables 371 are processed to produce output variables 377 that are stored in known locations 378, 379 in the memory 370. Intermediate variables 374 may be stored in additional memory locations in locations 375, 376 of the memory 370. Alternatively, some intermediate variables may only exist in the registers 354 of the processor 305.

The execution of a sequence of instructions is achieved in the processor 305 by repeated application of a fetch-execute cycle. The control unit 351 of the processor 305 maintains a register called the program counter, which contains the address in ROM 360 or RAM 370 of the next instruction to be executed. At the start of the fetch execute cycle, the contents of the memory address indexed by the program counter is loaded into the control unit 351. The instruction thus loaded controls the subsequent operation of the processor 305, causing for example, data to be loaded from ROM memory 360 into processor registers 354, the contents of a register to be arithmetically combined with the contents of another register, the contents of a register to be written to the location stored in another register and so on. At the end of the fetch execute cycle the program counter is updated to point to the next instruction in the system program code. Depending on the instruction just executed this may involve incrementing the address contained in the program counter or loading the program counter with a new address in order to achieve a branch operation.

Each step or sub-process in the processes of the methods described below is associated with one or more segments of the application program 333, and is performed by repeated execution of a fetch-execute cycle in the processor 305 or similar programmatic operation of other independent processor blocks in the electronic device 301.

Fig. 4 shows a flow diagram showing a method 400 of the payment terminal 205 processing a payment transaction. The method 400 is implemented by the modules 107, 109, 111, 113, and 120, which are implemented as one or more software application programs 333 that are executable by the processor 305.

The method 400 commences at step 405 by receiving a payment transaction. Step 405 is performed by the payment module 109 receiving the payment transaction from the merchant till 120 or from manual entry by a user. The method 400 then proceeds from step 405 to step 410.

In step 410, the method 400 activates the card reader module 107. As described hereinbefore, the payment module 109 activates the card reader module 107 in response to receiving the payment transaction. The method 400 then proceeds from step 410 to step 415.

In step 415, the method 400 receives the card profile. The card reader module 107 reads the payment device 115 when the payment device 115 is presented to the payment terminal 205. When the card reader module 107 reads the payment device 115, the card reader module 107 acquires the card profile contained within the payment device 115. As discussed hereinbefore, Priority #1 and/or Priority #2 card profiles are acquired depending on which configuration is programmed in the PPSE. If the first arrangement is programmed in the PPSE, then the card reader module 107 acquires Priority #1 card profile from the payment device 115. However, if the second arrangement is programmed in the PPSE, then the card reader module 107 acquires Priority #1 and Priority #2 card profiles from the payment device 115. The method 400 then proceeds from step 415 to step 420.

In step 420, the card reader module 107 (and other relevant components, depending on which arrangement of Figs. 2A to 2C is implemented) transmit the required payment transaction details (including the card profile) to the dynamic routing module 120. The required payment transaction details transmitted to the dynamic routing module 120 include:

   a) Card brand and type:

   *a.* Card brand: payment network that issued the card

   *b.* Card type: credit, debit, prepaid

   *c.* Card product: standard, premium, super premium, commercial etc

   b) EMV application data

   *a.* Application identifier (AID): to determine the type of payment device 115, such as physical card, digital card

   c) Additional data elements:

   *a.* Country code: country of issue of the payment device 115

   d) Merchant data elements:

   *a.* MCC: Merchant Category Code

   *b.* Authorization type: pre, partial, final

   *c.* Transaction amount

Items a) to c) listed in the paragraph immediately above (i.e., Card brand and type, EMV application data, and additional data elements) are acquired by the card reader module 107 from the payment device 115. Item d) listed in the paragraph immediately above (i.e., merchant data elements) is either pre-programmed or acquired from the merchant till 120 (or manually entered by the user at the payment module 109). The required payment transaction details listed above are not exhaustive and there may be other required data elements included in the payment transaction.

The method 400 then proceeds from step 420 to sub-process 500.

Sub-process 500 is performed by the dynamic routing module 120. Sub-process 500 is implemented as one or more software application programs 333 that are executable by the processor 305. Sub-process 500 is shown in Fig. 5. Sub-process 500 is one possible method that could be performed by the dynamic routing module 120. A skilled person would understand that there are other logic processes that could be implemented to achieve similar results.

Sub-process 500 commences at step 505 where the dynamic routing module 120 receives the payment transaction with the card profile. Sub-process 500 then proceeds from step 505 to step 510.

In step 510, the dynamic routing module 120 determines whether the received card profile relates to more than one payment network. In one arrangement, the dynamic routing module 120 compares the received card profile against a list of Multi Network Credit Card (MNCC) and Dual Network Debit Card (DNDC) Bank Identification Numbers (BINs). If the received card profile is listed, then the received card profile is determined to be related to more than one payment network. If YES, sub-process 500 proceeds from step 510 to step 515. If NO, sub-process 500 concludes.

In step 515, the dynamic routing module 120 determines whether the merchant category code received in the payment transaction relates to a specific merchant arrangement. In one arrangement, a merchant with a specific arrangement relates to a merchant that is classified as charity or granted a strategic merchant rate. The specific arrangement may be arranged with MasterCard™ or Visa™ such that the merchant has reduced rates. If YES, sub-process 500 proceeds from step 515 to step 525. If NO, sub-process 500 proceeds from step 515 to step 520.

In step 520, the dynamic routing module 120 determines the standard transaction parameter based on the card profile and payment transaction details from Merchant Till 120. The card profile includes Priority #1 network (e.g., MasterCard™, Visa™), product type (standard, premium, commercial), and device type (physical, digital). The process of determining the standard transaction parameter is described hereinafter in relation to step 525. Sub-process 500 then proceeds from step 520 to step 525.

In step 525, the dynamic routing module 120 determines the optimal payment network. In one example arrangement, the dynamic routing module 120 inputs the payment transaction details into an optimizing algorithm contained therein. The optimizing algorithm then determines an optimal payment network for those particular payment transaction details.

The optimizing algorithm and the algorithm for determining standard transaction parameter in the dynamic routing module 120 have variables that are regularly updated (e.g., daily, weekly, etc.) by the dynamic routing server 122. For the algorithm of determining standard transaction parameter, the dynamic routing server 122 analyses the combination of parameters listed in step 420 above based on historical data of those parameters and determine an average or median values of the desired parameter (e.g., approval rates, fraud rates, etc.). The dynamic routing server 122 then transmits, at a predetermined interval (e.g., daily, weekly, etc.), the determined average or median values of the parameters to the dynamic routing module 120. The dynamic routing module 120 then determines the standard transaction parameter based on the average or median values of the parameter. A similar process occurs for the optimization algorithm, where dynamic routing server 122 determines the variables of the optimization algorithm and regularly updates the optimization algorithm. One arrangement of the optimization algorithm of the dynamic routing module 120 is a look-up table. In this arrangement, the dynamic routing module 120 provides the received input (discussed above in relation to step 420) and determines the output from the look-up table.

If step 520 is used, the standard transaction parameter determined at step 520 is compared at step 525 against the parameter of the optimal payment networkas determined by the optimization algorithm. The payment network providing better results is then determined to be the optimal payment network.

Sub-process 500 proceeds from step 525 to step 530.

In step 530, sub-process 500 transmits the optimal payment network (determined at step 525) to the relevant module of the payment terminal 205. If the embodiments shown in Figs. 2A and 2B are implemented, then the optimal routing network is transmitted to the payment module 109. If the embodiment shown in Fig. 2C is implemented, then the optimal routing network is transmitted to the acquirer module 111. Sub-process 500 concludes at the conclusion of step 530 and control reverts back to the method 400.

As shown in Fig. 4, the method 400 proceeds from sub-process 500 to step 425 or step 415. If the optimal routing network relates to a card related to a Priority #2 card profile (and the first arrangement is implemented, where only Priority #1 card profile from the payment device 115), then the method 400 proceeds from sub-process 500 to step 415. Otherwise, the method 400 proceeds from sub-process 500 to step 425.

If the first arrangement is implemented and the optimal payment network relates to a Priority #2 card profile, step 415 acquires Priority #2 card profile from the payment device 115. Accordingly, when the first arrangement is implemented, there is a technical need to determine the optimal routing network within 20-30ms to enable the card reader module 107 to sequentially read the payment device 115 when required. Once the Priority #2 card profile is acquired, the method 400 proceeds from step 415 to step 425 (without having to transmit the Priority #2 card profile to the dynamic routing module 120 again).

In step 425, the method 400 receives the optimal payment network. The optimal payment network is received by the relevant module as discussed above in relation to step 530. The method 400 then proceeds from step 425 to step 430.

In step 430, the relevant module transmits the optimal payment network and payment transaction to the acquirer module 111 and the relevant payment kernel 113. The acquirer module 111 and the relevant payment kernel 113 transmits the payment transaction to the acquirer host 110 which then routes the payment transaction to the optimal payment network to initiate payment processing. Accordingly, the payment terminal 205 uses the optimal payment network to process the payment transaction received at step 405. The method 400 then proceeds from step 430 to step 435.

In step 435, the payment terminal 205 receives a response from the acquirer host 110. The response may be an approval or denial of the payment transaction. The method 400 concludes at the conclusion of step 435.

The present disclosure now describes the operation of the dynamic routing server 122 in determining an optimal payment network based on a parameter.

In the development of machine learning models for payment transaction processing, a controlled environment is crucial to ensure accuracy, reliability, and compliance with industry regulations. The development of machine learning models at the dynamic routing server 122 can be broken down into 8 steps, as follows:

1. Data Sourcing and Pre-processing: Data is sourced from various sources, including transaction records, merchant data, detailed network billing, authorization, clearing, settlement data records, fraud databases, and historical network information. Before training the machine learning models, the data undergoes pre-processing steps such as cleaning, normalization, and feature engineering to ensure consistency and relevance. The processed data is then organized into relevant data structures for analysis and modelling.

2. Secure Data Storage: Data is securely stored in a centralized data repository, adhering to strict security protocols and encryption standards to protect sensitive information and ensure compliance with data privacy regulations. Personal Identifying Information and payment card information such as PAN, expiry, CVV/CVC are not contained or used in controlled data environment, nor is it brought into this environment at any time.

3. Development Environment: Machine learning models are developed in a dedicated development environment equipped with the necessary tools and frameworks (e.g., Python, R). Version control systems are used to track changes and manage codebase integrity. Various modelling methods such as linear/logistic regression, anomaly detection, random forest classification, support vector machines, hybrid models (mix of models), and the like may be used. Modelling methods are evaluated for best fit for the prediction. Test and learn approach is deployed on a continuous basis to deploy best model for task at hand. For example, in one arrangement, random forest classification is determined to provide the best model for determining the optimal payment network for fraud rates.

4. Model Training: Using historical transaction data and labelled datasets (e.g., fraud/non-fraud), machine learning models are trained to detect patterns, anomalies, and trends indicative of fraudulent activity. Various algorithms and techniques (e.g., supervised learning, unsupervised learning) are employed to optimize model performance. Similar methods are used to determine the optimal payment network for other parameters (e.g., approval rates, cost, etc.).

5. Cross-Validation and Evaluation: Trained models undergo rigorous cross-validation and evaluation processes to assess their performance metrics (e.g., accuracy, precision, recall). This ensures that the models generalize well to unseen data and exhibit robustness in real-world scenarios.

6. Testing and Validation: Models are subjected to extensive testing and validation against simulated and real-world datasets to validate their effectiveness in detecting optimal routing of transactions while minimizing false positives and negatives.

7. Deployment and Monitoring: Once validated, the models are deployed into production environments for real-time transaction routing via the dynamic routing module 120. Continuous monitoring and performance evaluation are conducted to detect drifts, biases, or deviations in model behaviour, requiring prompt adjustments or retraining as necessary.

8.Feedback Loop and Iterative Improvement: Feedback from model performance, user experience, and business stakeholders is incorporated into iterative improvement cycles. This continuous learning process enables the refinement and enhancement of machine learning models over time.

In one arrangement, fraud rates determination may be performed using inputs of authorization type, transaction amount, time of the transaction, merchant month on book, merchant location, channel type, device type, merchant category code, transactions within time windows, number and spend volume in merchant by time window, card product, cost, and the like. These inputs can then be used by the machine learning models (e.g., logistic, anomaly detection, random forest classification, support vector machine, decision tree, hybrid models, etc.) to determine fraud rates based on different values of the inputs. Note that the inputs to the machine learning models are different to the inputs (see above in relation to step 420) to the dynamic routing model 120. There are more inputs to the machine learning models to determine fraud rates based on different inputs. However, once the machine learning models are trained, limited inputs (such as those stated in relation to step 420) are sufficient to determine an optimal payment network.

In this arrangement, the logistic regression formula of determining fraudulent transactions is as follows:

$$P(y = 1 \mid x) = \frac{1}{1 + e^{-(b_0 + b1x_1 + b_2x_2 + b_nx_n)}}$$

Where $P(Y=1|X)$ is the probability of the transaction being fraudulent given the features; $b_0$, $n_1$, $b_2$, $b_n$ are the coefficients of the model; $x_1$ is the transaction amount; $x_2$ is the channel instore; $x_3$ is the merchant MOB. Other $x_n$ may be used.

Similar to the above, authorization approval determination may be performed using similar inputs and similar machine learning models. In this arrangement, the random forest classification using decision tree to select the optimal payment network is as follows:

$$Y = Mode(D_1(N), D_2(N), D_n(N))$$

Y is the predicted outcome for network selections

$D_1$ Is an individual Tree    $D_1(N)$ are the prediction
$D_2$ Is an individual Tree    $D_2(N)$ are the prediction
....    .....
$D_N$ Is an individual Tree    $D_n(N)$ are the prediction

The above random forest classification may then use the following pseudocode:

```
Eg of one branch of Decision Tree
IF Transaction Amount > xx
    AND Authorisation Type is "Final Authorisation"
    AND Card Entry Mode is "contactless"
    ANDTime of the Transaction is between a and b
    THEN Outcome as Network 1

ELSE IF Transaction Amount > $x
    AND Merchant Location is GEO_7
    AND Card Entry Mode is "insert"
    AND Authorisation Type is "Pre-Authorisation"
    THEN Outcome Network 2
```

Similar to the above, network cost determination may be performed using similar inputs and similar machine learning models. In this arrangement, a decision tree may be used:

```
Eg of some branch of Decision Tree
IF Transaction Amount < X
    AND Authorisation Type is "Final Authorisation"
    AND Card Entry Mode is "contactless"
    AND Card Product is "Premium"
```

```
   THEN Outcome as Network 1

ELSE IF Transaction Amount between $Y and $Z
   AND Authorisation Type is "Pre-Authorisation"
   AND Card Entry Mode is "insert"
   AND Device Type is "Mobile"
   AND Card Product is "Premium"
   THEN Outcome Network 2
```

**Industrial Applicability**

The arrangements described are applicable to the financial transaction industries.

The foregoing describes only some embodiments of the present invention, and modifications and/or changes can be made thereto without departing from the scope and spirit of the invention, the embodiments being illustrative and not restrictive.

In the context of this specification, the word "comprising" means "including principally but not necessarily solely" or "having" or "including", and not "consisting only of". Variations of the word "comprising", such as "comprise" and "comprises" have correspondingly varied meanings.

**Claims**

1.  A payment terminal comprising:
    a dynamic routing module configured to:

    receive a payment transaction having a card profile; and
    determine an optimal payment network for the received payment transaction based on a parameter, wherein the payment terminal uses the optimal payment network to process the payment transaction.

2.  The payment terminal of claim 1, wherein the dynamic routing module comprises an optimization algorithm for determining the optimal payment network.

3.  The payment terminal of claim 2, wherein the optimization algorithm is a look-up table.

4.  The payment terminal of claim 2 or 3, wherein the optimization algorithm is updated by a dynamic routing server, the dynamic routing server comprising a machine learning model for determining the optimal payment network based on the parameter.

5.  The payment terminal of any one of claims 1 to 4, wherein the parameter is any one of approval rates, fraud rates, transaction rates, costs, and transmission rates.

6.  The payment terminal of any one of claims 1 to 5, wherein the dynamic routing module is integrated within a Proximity Payment Service Environment.

7.  A method of determining an optimal payment network for a payment transaction having a card profile, the method comprising the steps of:

    receiving a payment transaction having a card profile; and
    determining an optimal payment network for the received payment transaction based on a parameter, wherein the payment terminal uses the optimal payment network to process the payment transaction.

8.  The method of claim 7, wherein an optimization algorithm is used for determining the optimal payment network.

9.  The method of claim 7 or 8, the method further comprising:
    receiving an update from a dynamic routing server, the dynamic routing server comprising a machine learning model for determining the optimal payment network based on the parameter.

10. The method of any one of claims 7 to 9, wherein the parameter is any one of approval rates, fraud rates, transaction rates, costs, and transmission rates.

11. A computer readable medium comprising computer application programs that are executable by a processor, wherein the computer application programs implement the method of any one of claims 7 to 10.

12. A dynamic routing server comprising:
machine learning models configured to determine optimal payment networks based on inputs, wherein the optimal payment networks are transmitted to a dynamic routing module on a payment terminal.

13. The dynamic routing server of claim 12, wherein the machine learning models are any one of logistic, anomaly detection, random forest classification, support vector machine, decision tree, and hybrid models.

14. The dynamic routing server of claim 12 or 13, wherein the inputs are any one of authorization type, transaction amount, time of the transaction, merchant month on book, merchant location, channel type, device type, merchant category code, transactions within time windows, number and spend volume in merchant by time window, cost, and card product.

15. A payment system having:

   a payment terminal according to any one of claim 1 to 6; and
   a dynamic routing server according to claim 13 or 14.

100

Payment Device 115

Payment Terminal
105

Acquirer Host 110

Merchant Till 120

## Fig. 1A (Prior Art)

115

105

Card
Reader
Module
107

Payment
Module
109

Acquirer
Module 111

Payment
Kernels 113

110

120

## Fig. 1B (Prior Art)

200

205

115

107

111 ⟷ 113 ⟷ 110

Dynamic Routing
Module 120

109

120

Dynamic
Routing Server
122

# Fig. 2A

200

205

115

107

111 ⟷ 113 ⟷ 110

109 ⟷ Dynamic
Routing
Module 120

120

Dynamic
Routing Server
122

# Fig. 2B

200

| Dynamic Routing Server 122 |
|---|

115

205

| Dynamic Routing Module 120 |
|---|

107

111 ↔ 113 ↔ 110

109

120

**Fig. 2C**

**Fig. 3A**

**Fig. 3B**

START

400

Receiving payment transaction details — 405

Activating card reader — 410

Receiving card profile — 415

Transmitting the transaction details and card profile to the dynamic routing module — 420

Dynamic Routing Sub-process — 500

If further details are required

Receiving optimal payment network — 425

Transmitting the optimal routing data and transaction and card details to the acquirer (CPAT) and payment kernel — 430

Receiving response from an acquirer host — 435

END

Fig. 4

<u>500</u>

```
        ┌─────────────┐
        │    START    │
        └─────────────┘
               │
               ▼
```

Receiving the payment transaction having a card profile — 505

Does the card profile relate to more than one payment network? — 510

NO

YES

Does the merchant category code in the payment transaction details relate to a specific merchant arrangement? — 515

YES

NO

Determine standard transaction parameter based on card profile and payment transaction — 520

Determine optimal payment network — 525

Transmit optimal payment network — 530

```
        ┌─────────────┐
        │     END     │
        └─────────────┘
```

**Fig. 5**

**Europäisches Patentamt**
**European Patent Office**
**Office européen des brevets**

# EUROPEAN SEARCH REPORT

**Application Number**

EP 25 17 8258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/242836 A1 (FACEBOOK INC [US]) 3 December 2020 (2020-12-03) * figure 1 * * paragraph [0008] * * paragraph [0017] - paragraph [0019] * * paragraph [0035] - paragraph [0041] * * paragraph [0049] - paragraph [0050] * * paragraph [0071] - paragraph [0072] * * paragraph [0075] * ----- | 1-15 | INV. G06Q20/02 G06Q20/40 |
| X | US 2014/025567 A1 (RIGBY MARK [GB] ET AL) 23 January 2014 (2014-01-23) * figure 5 * * paragraph [0054] * * paragraph [0060] - paragraph [0061] * * paragraph [0067] - paragraph [0068] * ----- | 1-15 | |

**TECHNICAL FIELDS SEARCHED (IPC)**

G06Q

The present search report has been drawn up for all claims

| Place of search | Date of completion of the search | Examiner |
|---|---|---|
| The Hague | 9 October 2025 | Coquil, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 8258

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2025

| Patent document cited in search report | Publication date | Patent family member(s) | | Publication date |
|---|---|---|---|---|
| WO 2020242836 A1 | 03-12-2020 | CN | 113924590 A | 11-01-2022 |
| | | EP | 3977384 A1 | 06-04-2022 |
| | | WO | 2020242836 A1 | 03-12-2020 |
| US 2014025567 A1 | 23-01-2014 | NONE | | |

EPO FORM P0459

For more details about this annex : see Official Journal of the European Patent Office, No. 12/82